# EUROPÄISCHE PATENTSCHRIFT

(11) **EP 3 555 964 B1**
(45) Veröffentlichungstag und Bekanntmachung des Hinweises auf die Patenterteilung: **27.10.2021**
(21) Anmeldenummer: 17771351.8
(22) Anmeldetag: 04.09.2017
(51) Int. Cl.: H01R 4/62, H01R 43/02, B23K 20/10, H01R 11/12

(54) **FÜGEN EINES ANSCHLUSSELEMENTS MIT EINEM LITZENLEITER**
JOINING A CONNECTING ELEMENT TO A STRANDED CONDUCTOR
RACCORDEMENT D'UN CONNECTEUR ÉLECTRIQUE ET D'UN CONDUCTEUR MULTIBRIN

(30) Priorität: 16.12.2016 DE 102016124583
(43) Veröffentlichungstag der Anmeldung: 23.10.2019
(73) Patentinhaber: Auto-Kabel Management GmbH, 79688 Hausen i.W. (DE)
(72) Erfinder: SCHARKOWSKI, Oliver, 79669 Zell im Wiesental (DE)
(74) Vertreter: Cohausz & Florack
(86) Internationale Anmeldenummer: PCT/EP2017/072080
(87) Internationale Veröffentlichungsnummer: WO 2018/108342

(56) Entgegenhaltungen:
- EP-B1- 2 227 347
- WO-A1-2015/041875
- DE-A1-102011 017 070
- DE-A1-102014 004 127
- DE-B3-102005 030 248
- DE-B4-102011 017 070
- DE-B4-102014 004 127
- US-A1- 2011 094 797

## Beschreibung

Der Gegenstand betrifft eine Verbindung eines Litzenleiters mit einem Anschlussteil mit einem Ende des Aluminiumlitzenleiters, und einem mit dem Ende des Litzenleiters stoffschlüssig verbundenem Anschlussteil. Darüber hinaus betrifft der Gegenstand ein Verfahren zur Herstellung einer solchen Verbindung als auch eine Verwendung einer solchen Verbindung.

Die Verbindung von Litzenleitern mit Anschlussteilen, beispielsweise Kabelschuhen aus Kupfer oder anderen Nichteisenmetallen ist beispielsweise aus der EP 1 032 077 A2 bekannt.

Bei dem aus der EP 1 032 077 B2 bekannten Verfahren wird durch eine Stützhülse mittels Rotationsreibschweißen eine stoffschlüssige Fügeverbindung zwischen Kontaktteil, Stützhülse und Leitung erzeugt, welche im Wesentlichen ohne Lufteinschlüsse zwischen den Einzellitzen des Aluminiumlitzenleiters in der Fügezone ist. Die Aluminiumlitzen bilden dabei mantelseitig mit der Stützhülse lediglich einen Kraft- und Formschluss. Die Aluminiumhülse bildet im Verbund mit den Aluminiumlitzen des Aluminiumlitzenleiters stirnseitig einen Stoffschluss mit dem Kabelschuh welcher aus Kupfer oder anderen Nichteisenmetallen besteht.

Bei dem aus der EP 2 227 347 B1 bekannten Verfahren wird die Aufgabe auch durch eine Fügeverbindung zwischen Kontaktteil, Stützhülse und Leitung mittels torsionalen Ultraschallschweißen erzeugt. Auch hier bilden die Aluminiumlitzen mantelseitig mit der Stützhülse nur einen Kraft- und Formschluss. Die Aluminiumhülse bildet im Verbund mit den Aluminiumlitzen des Aluminiumlitzenleiters stirnseitig einen Stoffschluss mit dem Anschlussteil. Die Fügepartner, nämlich der Aluminiumlitzenleiter und das Anschlussteil, werden beim torsionalen Ultraschallschweißen mittels axialer Relativbewegungen zueinander bewegt.

Aus der DE 10 2011 017 070 A1 ist die Herstellung einer Verbindung eines Kabels mit einem Kabelschuh bekannt. Der Kabelschuh ist dabei rohrförmig und das Kabel ist an eine stirnseitige Fläche des Kabelschuhs angeschweißt.

Die WO 2015/041875 A1 beschreibt eine Vorrichtung zum Vercrimpen einer Kabelhülse über einen Litzenleiter.

Die DE 10 2014 004 127 A1 beschreibt ein Verfahren zum Verschließen einer Hülse, in die ein Kabel eingesetzt ist. Die Hülse wird dabei stirnseitig verpresst, um das Kabel in der Hülse zu befestigen.

Nachteilig an dem aus der EP 1 032 077 B2 bekannten Rotationsreibschweißen ist, dass die Fügepartner rotationssymmetrisch sein müssen. Aufgrund der hohen Rotationsgeschwindigkeiten führen Unsymmetrien in der Rotationsebene der Fügepartner zu Unwuchten, welche den Fügeprozess negativ beeinträchtigen. Nachteilig sind auch die Kosten und das Gewicht der Kabelschuhe die in der Praxis aus geschmiedeten Kupfer oder Messing bestehen. Darüber hinaus die der Anlagenpreis hoch.

Darüber hinaus ist es beim Rotationsreibschweißen nicht möglich, einen exakt definierten axialen Winkel zwischen den Fügepartnern einzustellen. Die Endposition der Rotationsreibschweißwerkzeuge zueinander lässt sich nicht exakt definiert bestimmen. Auch ein radialer Winkel der Fügepartner zueinander abweichend 0° lässt sich prozesstechnisch mit Rotationsreibschweißen nur sehr schwer realisieren. Des Weiteren ist der Einsatz des Rotationsreibschweißverfahren prozessbedingt auf Querschnitte von über 35 mm² begrenzt und die Taktzeit des Prozesses ist sehr hoch.

Des Weiteren ist die Stützhülse, die die Stauchkräfte vom Rotationsreibschweißwerkzeug aufnehmen soll, nur kraft- und formschlüssig mit dem Litzenleiter verbunden. Dies hat zur Folge, dass die Hülse dementsprechend groß dimensioniert werden muss, um die Stauchkräfte aufnehmen zu können. Somit hat auch die Leitung durch die groß dimensionierte Stützhülse einen langen und steifen Kontaktanschlussbereich. Dieser Kontaktanschlussbereich kann Probleme bei der Montage der Leitung verursachen.

Nachteilig aus dem der EP 2 227 347 B1 beschriebenen torsionalen Ultraschallschweißen ist, dass die Anschlussteile durch die torsionale Einbringung der benötigten Fügeenergie mittels Ultraschall in der Praxis häufig reißen. Desweitern ist die Anlagentechnik für das torsionale Ultraschallschweißen sehr komplex und fehleranfällig.

Aus diesem Grunde lag dem Gegenstand die Aufgabe zugrunde, ein Verbindung und ein Fügeverfahren zu realisieren, mit welchem Litzenleiter mit Anschlussteilen in axial und radial definierten Positionen sicher und ohne Schaden miteinander verbunden werden können, sowie eine guten elektrische Leitfähigkeit der Verbindung zu garantieren. Außerdem soll die Komplexität des Fügeprozesses gesenkt werden, um eine sichere industriele Serienproduktion realisieren zu können.

Diese Aufgabe wird gegenständlich durch ein Verfahren nach Anspruch 1 und eine Verbindung nach Anspruch 11 gelöst. Es ist erkannt worden, dass sich mit zweckmäßigen Schweißverfahren, insbesondere mittels longitudinalen Ultraschallschweißen, das Verpressteil, nachfolgend auch Stützhülse genannt, mit dem Litzenleiter zunächst form- und kraftschlüssig verpressen lässt. Im Anschluss kann im selben Werkzeug die form- und kraftschlüssig verpresste Stützhülse mittels Ultraschallschweißen stoffschlüssig mit den Litzenleiter verschweißt werden. Hierbei erfolgt die stoffschlüssige Verbindung zwischen dem Litzenleiter und der Stützhülse mantelseitig. Dies hat den Vorteil, dass durch den Stoffschluss von der Mantelinnenseite der Stützhülse und der Mantelaußenseite vom Litzenleiter höhere Stauchkräfte aufgenommen werden können und die elektrische Leitfähigkeit der Verbindung hoch ist.

Dadurch kann gegebenenfalls die Stützhülse gegenüber bekannten Verfahren mit einer geringen axialen Länge und Wandstärke dimensioniert werden kann. Auch kann durch das stoffschlüssige Fügen der Fügepartner Stützhülse und Litzenleiter mittels Ultraschall die nicht elektrisch leitende Oxidschicht, die sich auf den Fügepartnern gebildet hat, aufgebrochen werden. Durch das Verschweißen der Stützhülse kann ein Stoffschluss der Einzellitzen untereinander im Bereich der Stützhülse stattfindet. Dies hat einen besseren Übergangswiderstand vom Litzenleiter zur Stützhülse zur Folge.

Der Vorteil des stoffschlüssigen, mantelseitigen Fügens der Stützhülse mit dem Litzenleiter besteht des Weiteren darin, dass Hohlräume, die beim Fügen durch reines

Verpressen entstehen können, nicht auftreten und so eine Korrosion durch Elektrolyt vermieden wird.

Auch ist es möglich die Stützhülse nicht rotationssymmetrisch auszubilden. Vorstellbar ist ein Mehrkant, wie z.B. ein Sechskant oder Vierkant. Durch den mantelseitigen Stoffschluss wird das Verpressen gegenüber bisherigen Lösungen für die tatsächliche Verbindung weniger relevant. Daher kann die Stützhülse auch andere Querschnittsformen als rotationssymmetrisch annehmen.

Vorteilhaft ist auch, wenn die Stützhülse über das abisolierte Litzenleitungsende hinausgeht. Dabei kann die Stützhülse eine Art Wulst auf der Isolation von der Litzenleitung bilden. So kann eine Gasdichte Verbindung zwischen Stützhülse und Litzenleitung realisiert werden.

Auch ist es möglich die Stützhülse in einer Form auszuführen die ein Durchstecken der Einzellitzen der Litzenleitung zulässt. Diese Ausführungsform hat den Vorteil, dass ein sicheres Positionieren der Stützhülse auf der Litzenleitung gegeben ist.

Nach dem Fügen der Stützhülse auf der Litzenleitung kann die Stützhülse vor dem Verbinden mit dem Anschlusselement stirnseitig abgetrennt, insbesondere plan abgetrennt, insbesondere geschnitten oder gefräst oder durch sonstige trennende Verfahren getrennt werden.

Es ist auch denkbar die Stützhülse nach dem Fügen auf der Litzenleitung nicht mehr mit spannhebenden Verfahren zu bearbeitet. Eine nicht ganz plane Fügefläche oder das direkte Fügen vom Anschlusselement auf die durch die Stützhülse durchgesteckten Einzellitzen vom Litzenleiter ist mit dem hier beschreibenden Verfahren möglich. Unebenheiten oder herausragende Einzellitzen werden beim Schweißvorgang plastifiziert und schieben sich als Wulst an den Rand der Fügepartner in Höhe der Fügezone was einen zusätzlichen Korrosionsschutz zur Folge hat. Dadurch, dass die Stützhülse bereits mit dem Litzenleiter verschweißt ist, kommt es beim anschließenden Fügen mit dem Anschlussteil nicht mehr zu einem Verschieben der Litzenleitung in der Hülse. Anders als bei bekannten Verfahren wird der Litzenleiter nicht aus der Stützhülse heraus gedrückt, wenn das Anschlussteil stirnseitig gegen die Hülse und/oder den Litzenleiter gedrückt wird.

Zum Fügen mit dem Anschlusselement wird der Verbund aus Stützhülse und Litzenleiter eingespannt. Hierdurch kann der Verbund aus Stützhülse und Litzenleiter in eine definierte Schweißposition zum Anschlusselement ausgerichtet und anschließend ultraschallverschweißt werden. Die Schweißposition kann zum Beispiel einen winklig, z.B. in einem Winkel von insbesondere 45°, zwischen den Fügepartnern Litzenverbund und Anschlusselement sein.

Beim Fügen vom Anschlusselement wird der Verbund aus Stützhülse und Litzenleiter eingespannt um beim Fügen vom Anschlusselement mittels vorzugsweise longitudinalen Ultraschallschweißen den Verbund aus Stützhülse und Litzenleiter in eine definierte Schweißposition zum Anschlusselement auszurichten. Die Schweißposition kann derart sein, dass die Längssache der Stützhülse in einem anderen Winkel als 90° zu der Anschlussfläche des Anschlussteils ist. Insbesondere sind Winkel von um die 45° zwischen Längsachse der Stützhülse und Anschlussfläche möglich.

Hierzu wird vorgeschlagen, dass zunächst, z.B. mittels spannhebender Verfahren, am fertigen stoffschlüssigen Verbund zwischen Stützhülse und Litzenleiter eine Fügefläche mit dem notwendigen Winkelversatz vorbereitet wird.

Auch leichte Positionierungsfehler der beschreibenden Fügepartner in axialer Richtung können mit dem hier beschreibenden Verfahren ausgeglichen werden. Der Vorteil durch die freie Positionierung der beschreibenden Fügepartner zueinander liegt in der freieren Konstruktion der Leitungen und in der Endmontage.

Auch wird vorgeschlagen, dass die bereits beschreibende Spann- und Schweißvorrichtung, die für den Verbund aus Stützhülse und Litzenleiter genutzt wird, um den anschließenden Fügeprozess mit dem Anschlusselement durchzuführen. Das Werkzeug, mit welchem die Stützhülse mit dem Litzenleiter vorzugsweise zunächst form- und kraftschlüssig verpresst kann im Anschluss die verpresste Stützhülse mit zweckmäßigen Schweißwerkzeugen mittels Ultraschallschweißen stoffschlüssig mit dem Litzenleiter verschweißen.

Die Spannvorrichtung, die den Verbund aus Stützhülse und Litzenleiter für den Fügeprozess mit dem Anschlusselement positioniert, kann aus den Schweißwerkzeugen bestehen, welche die Stützhülse mit dem Litzenleiter form- und kraftschlüssig verpressen und im Anschluss die form- und kraftschlüssig mit dem Litzenleiter verpresste Stützhülse verschweißt und schließlich mit dem Anschlussteil stoffschlüssig verschweißt. Dabei wäre es ggf. notwendig, den Sonotrodenkopf anzupassen. Der Vorteil liegt hier in der Möglichkeit, preiswert, in hoher Taktzeit, unkompliziert und in hoher Qualität flexible, elektrisch leitfähige Kontaktierungen zu erstellen.

Das Anschlussteil kann ein metallischer Flachleiter, Blechband, Blechbiegeteil, Blechstanzteil, Schmiedeteil oder sonstiger Gegenstand sein der eine Schweißfläche und eine Fläche zum Einbringen der Schweißenergie mittels Sonotrode aufweist. Die Schweißfläche und die Fläche zum Einbringen der Schweißenergie sollten vorzugsweise parallel zueinander liegen. Es ist denkbar, die Arbeitsfläche der Sonotrode geometrisch an das Anschlusselement anzupassen, dies hat den Vorteil noch freier in der Konstruktion der Anschlusselemente zu sein.

Es hat sich gezeigt, dass die Schweißenergie besonders punktgenau in die Verbindung eingebracht werden kann, wenn das Ultraschallschweißen mittels Ultraschallwalzschweißen verschweißt ist. Beim Ultraschallwalzschweißen ist eine Torsionssonotrode vorgesehen, welche an einer Umfangsfläche ihre Arbeitsfläche hat. Die Sonotrode wird um ihre Längsachse in Schwingung versetzt. Hierdurch führt die Arbeitsfläche eine Walzbewegung aus. Die Arbeitsfläche hat vorzugsweise vollständig einen konstanten radialen Abstand von der Längsachse der Sonotrode. Die Arbeitsfläche wird mit einem Druck gegen das Anschlussteil gepresst und die Walzbewegung wird eingeleitet. Durch die Arbeitsfläche wird gleichmäßig die Schweißenergie in das Anschlussteil eingebracht.

Auch ist es möglich, zunächst die Litzenleitung stirnseitig über die Stützhülse hinaus in die Stützhülse einzuschieben. Wenn dann anschließend zunächst die Stützhülse mit der Litzenleitung ultraschallverschweißt wird, hat das den Vorteil, dass ein sicheres Positionieren der Stützhülse auf der Litzenleitung ermöglicht ist. Dadurch kann die Stützhülse mit einer geringeren Länge verwendet werden. Nach dem Fügen der Stützhülse auf der Litzenleitung kann die Stützhülse zusammen mit der Litzenleitung stirnseitig plan getrennt, insbesondere geschnitten oder gefräst werden. Die Stützhülse zusammen mit der Litzenleitung hat dann eine plane Stirnfläche, die zum anschließenden Verschweißen besonders geeignet ist.

Auch wird vorgeschlagen, was eigenständig erfinderisch ist und im allen hier beschriebenen Merkmalen kombinierbar ist, dass die Stützhülse entfällt und die Einzellitzen am abisolierten Ende des Litzenleiters mittels vorzugsweise longitudinalen Ultraschallschweißen zunächst kompaktiert werden, um so einen massiven Stoffschluss der Einzellitzen untereinander herzustellen. An der Stirnseite der verschweißten Litzen kann das Anschlusselement mittels vorzugsweise longitudinalen Ultraschallschweißen gefügt werden kann. Auch bei dieser Verfahrensvariante ist nach vorzugsweise spannhebender Nacharbeit der Stirnseite des kompaktierten Teils ein Fügen mit dem Anschlusselement in einem oben beschriebenen Winkel möglich.

Es ist erkannt worden, dass sich mittels Ultraschallwalzschweißen die Schweißverbindung besonders punktgenau unter Einbringung hoher Schweißenergie herstellen lässt. Die Fügepartner werden beim Ultraschallwalzschweißen mittels einer tangentialen Bewegung der Arbeitsfläche auf dem Anschlussteil verschweißt. Hierbei schwingt die Sonotrode vorzugsweise mit einem Hub zwischen beispielsweise 5° und 0,1° um ihre Längsachse. Die Bewegung der Sonotrode findet im Ultraschallbereich statt, beispielsweise mit einer Frequenz von 20kHz oder mehr. Die Fügepartner werden dabei in minimalen Amplituden, beispielsweise 10-100µm bevorzugt 20-40µm relativ zueinander bewegt. Insbesondere kann ei Fügepartner fest eingespannt sein und der andere bewegt werden. Durch die Anregung der Sonotrode oszilliert diese um die Längsachse und die Arbeitsfläche schwingt um die Längsachse. Da die Arbeitsfläche möglichst ganzflächig mit einem gleichen radialen Abstand von der Längsachse ist, liegt die Arbeitsfläche während der Schwingung auf der Fügefläche zwischen den Fügepartnern an.

Da die Schweißenergie durch eine Walzbewegung der Sonotrode eingebracht wird, müssen die Schweißflächen nicht mehr rotationssymmetrisch sein. Vielmehr können nun die verschiedensten Geometrien von Kontaktteilen, wie Rechtecke, Ovale oder Ellipsen, miteinander verschweißt werden. Es ist lediglich notwendig, dass das Anschlussteil die Litzen des Litzenleiters möglichst vollständig stirnseitig überdeckt. Gleiches gilt für das longitudinale Ultraschallschweißen.

Dadurch, dass beim Ultraschallwalzschweißen die Kontaktteile auch Blechbiegeteile (beschichtet oder unbeschichtet) sein können, ist es möglich, die Kontaktteile, die herkömmlich beim Rotationsreibschweißen eingesetzt werden, wie beispielsweise teure Schmiedekabelschuhe, durch günstige Blechbiegeteile zu ersetzen.

Gemäß einem vorteilhaften Ausführungsbeispiel wird vorgeschlagen, dass ein das Ende des Litzenleiters umschließendes Verpressteil die Litzen zu einem Bündel verpresst. Das Verpressen kann derart sein, dass das Bündel frei von Lufteinschlüssen ist. Insbesondere nach dem Abisolieren können die Litzen durch das Verpressteil kompaktiert werden. Hierbei werden mittels eines mechanischen Verpressens die Litzen derart aneinander gepresst, dass Hohlräume reduziert bzw. entfernt werden. Anschließend kann das verpresste Ende des Litzenleiters mittels spannhebender Verfahren bearbeitet werden, um Oxide auf der Stirnseite zu entfernen. Beispielsweise kann die Stirnseite überfräst werden, so dass sich eine ebene Stirnfläche bildet. Auch kann die Stirnfläche geschleift werden.

Dadurch, dass Hohlräume zwischen den Litzen vermieden werden, wird verhindert, dass im Bereich der Schweißnaht Korrosionen auftreten. Im Bereich der Schweißnaht kann der Litzenleiter ähnlich einem Vollmaterial verarbeitet werden, da Hohlräume vermieden sind.

Das Verpressteil kann gemäß einem vorteilhaften Ausführungsbeispiel als Hülse oder Splicecrimp gebildet sein. Die Hülse kann, bevor der Litzenleiter mit dem Anschlussteil verschweißt wird, auf das abisolierte Ende des Litzenleiters aufgeschoben und verpresst werden. Ein Splicecrimp kann beispielsweise derart geformt werden, dass ein Stück Endlosband, beispielsweise aus Aluminium oder Legierungen davon, beispielsweise mit einer Blechstärke von 1 bis 1,5mm, abgelängt und an das stirnseitige abisolierte Ende des Litzenleiters angebracht wird. Hierbei wird das Flachbandmaterial um die Litzen gelegt und verpresst, so dass an der Stirnfläche des Litzenleiters ein massiver, kompaktierter Bereich entsteht, der sich zum stirnseitigen Verschweißen mit einem Kontaktteil eignet. Anschließend kann das Verpressteil mantelseitig mit dem Litzenleiter verschweißt werden. Das Flachbandmaterial kann beispielsweise aus einem Endlosbandmaterial zugeführt werden.

Da beim Ultraschallwalzschweißen die Stauchkräfte erheblich geringer sind als beim Rotationsreibschweißen, können die Hülse oder der Splicecrimp mit geringen Wandstärken dimensioniert werden. Hierbei ist es beispielsweise möglich, dass die Wandstärken der Hülse bzw. des Splicecrimps zwischen 0,5 und 2mm sind. Auch ist es möglich, dass die axiale Länge des Splicecrimps oder der Hülse geringer sein kann als beim Rotationsreibschweißen. Beispielsweise ist es möglich, dass die Hülse kürzer als 5cm, bevorzugt kürzer als 3cm, insbesondere bevorzugt kürzer als 1cm ist. Eine solche axiale Länge reicht aus, um die auftretenden Stauchkräfte aufzunehmen.

Beim weiteren Verschweißen kann die Litzenleitung in eine geeignete Aufnahme eines Schweißwerkzeugs eingespannt werden, welche die beim Schweißen auftretenden axialen Kräfte aufnimmt. Hierbei ist es beispielsweise möglich, dass das Anschlussteil im Schweißbereich auf die Stirnfläche der verpressten Litzenleitung aufgesetzt wird und mit der Sonotrode axial in Richtung des Litzenleiters belastet wird.

Hierbei ist es beispielsweise möglich, dass die Arbeitsfläche der Sonotrode mit einem hohen Anpressdruck gegen das Anschlussteil gepresst wird. Dadurch wird die durch die Rotation der Arbeitsfläche eingebrachte Schweißenergie in das Anschlussteil und die verpresste Leitung eingebracht.

Gemäß einem vorteilhaften Ausführungsbeispiel wird vorgeschlagen, dass das Verpressteil die Aufnahme ist. Die Aufnahme des Werkzeuges kann beispielsweise derart geformt sein, dass diese die Litzen wie zuvor erläutert verpresst und kompaktiert. In diesem Falle wäre die Verwendung einer Hülse oder eines Splicecrimps überflüssig. Ebenfalls kann das Ultraschallschweißwerkzeug, insbesondere die Aufnahme, dazu genutzt werden, eine ausreichend hohe Kompaktierung der Litzenleitung zu erzielen.

Wie bereits zuvor erläutert, wird gemäß eines vorteilhaften Ausführungsbeispiels vorgeschlagen, dass eine Schweißnaht zwischen der Stirnseite des abisolierten Endes des Litzenleiters zusammen mit dem Verpressteil und dem Anschlussteil frei von Hohlräumen ist.

Das Verpressteil kann gemäß einem vorteilhaften Ausführungsbeispiel aus Aluminium oder Legierungen davon gebildet sein. Insbesondere kann das Verpressteil plastisch verformbar sein, so dass eine ausreichende Kompaktierung der Aluminiumlitzen des Aluminiumlitzenleiters erzielbar ist. Die Litzen können aus einem Aluminiumwerkstoff gebildet sein. Die Litzen können auch aus einem Kupferwerkstoff oder einem Aluminiumwerkstoff, der mit einem Kupferwerkstoff kaschiert ist, gebildet sein.

Das Anschlussteil kann gemäß einem vorteilhaften Ausführungsbeispiel ein Flachleiter sein. Dies kann beispielsweise ein sich über mehr als 30cm erstreckender Flachleiter sein. Auch ist es möglich, dass der Flachleiter ein Blechbiegeteil ist, welches an einem Ende mit der Aluminiumlitzenleitung verbunden ist und am anderen Ende eine Aufnahme für einen Bolzen oder eine Schraube aufweist.

Das Anschlussteil kann bevorzugt ein metallisches Anschlussteil sein. Es ist jedoch auch möglich, dass das Anschlussteil z.B. ein metallisch kaschiertes Flachteil ist. Insbesondere kann das Anschlussteil ein Multibond aus Metall und Kunststoff, insbesondere ein Alubond sein. Hierbei können Schichten aus Metall und Kunststoff miteinander laminiert sein. Insbesondere im Karosseriebau werden diese Verbundmaterialien zunehmend Verwendung finden. Zum Verschweißen eines solchen Verbundmaterials mit einem Litzenleiter ist das Ultraschallwalzschweißen von besonderem Vorteil.

Auch wird vorgeschlagen, dass das Anschlussteil ein L-förmiger Flachleiter ist, wobei ein Schenkel des Flachleiters mit dem Litzenleiter verbunden ist. Der Flachleiter kann beispielweise aus einem von einem Coil abgewickelten Band oder einem Blech gestanzt werden. Beim Stanzen ist es beispielsweise möglich, den Flachleiter unmittelbar zu formen.

Gemäß einem vorteilhaften Ausführungsbeispiel wird vorgeschlagen, dass das Anschlussteil ein Rundleiter ist. Auch die Verbindung zwischen zwei Rundleitern, dem Aluminiumlitzenleiter und einem weiteren Rundleiter, ist gegenständlich möglich. Der Rundleiter kann ebenfalls ein Litzenleiter sein oder auch ein anderer, beispielsweise aus einem Vollmaterial gebildeter Rundleiter sein. Auch ist es möglich, dass der Rundleiter ein Anschlussbolzen ist. Der Anschlussbolzen kann stirnseitig auf die Litze mit der Hülse gegenständlich gefügt sein.

Ein weiterer Aspekt ist ein Verfahren nach Anspruch 12 sowie eine Verwendung nach Anspruch 13.

Insbesondere kann das Verschweißen auch derart erfolgen, dass auf das Anschlussteil eine Schweißfläche einer Ultraschallsonotrode aufgesetzt wird, und dass die Schweißfläche mittels eines Konverters derart mit einer Ultraschallschwingung angeregt wird, dass die Schweißfläche longitudinal schwingt und dabei die Schweißenergie in das Anschlussteil und den Litzenleiter einbringt. Auch dieses Schweißverfahren lässt sich mit allen hier beschriebenen Merkmalen frei kombinieren.

Ein weiterer Aspekt ist die Verwendung einer zuvor beschriebenen Verbindung für ein Kraftfahrzeugenergiekabel insbesondere ein Batteriekabel.

Nachfolgend wird der Gegenstand anhand einer Ausführungsbeispiele zeigenden Zeichnung näher erläutert.

In der Zeichnung zeigen:
- Fig. 1a: eine erste mögliche Schweißverbindung eines Litzenleiters mit einem Flachleiter;
- Fig. 1b: eine Vorrichtung für die erste mögliche Schweißverbindung;
- Fig. 2a: eine zweite mögliche Schweißverbindung eines Litzenleiters mit einem Flachleiter;
- Fig. 2b: eine Vorrichtung für die zweite mögliche Schweißverbindung;
- Fig. 3a: eine dritte mögliche Schweißverbindung eines Litzenleiters mit einem Flachleiter;

- Fig. 3b: eine Vorrichtung für die dritte mögliche Schweißverbindung;
- Fig. 4: eine schematische Darstellung eines Ultraschallwalzschweißens;
- Fig. 5: ein Flussdiagramm eines Verfahrens gemäß eines Ausführungsbeispiels.

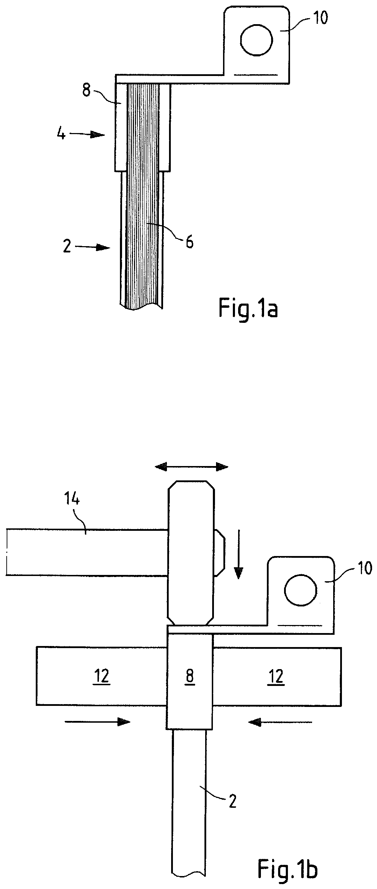

Fig. 1 zeigt einen Litzenleiter 2 (der auch ein Blechstanzteil sein kann), beispielsweise einen Aluminiumlitzenleiter, der nachfolgend stellvertretend genannt wird, mit einem abisolierten Ende 4. An dem abisolierten Ende 4 sind die Aluminiumlitzen 6 zu erkennen. Ferner zeigt die Figur 1 ein Verpressteil 8. Der in Figur 1 dargestellte Aluminiumlitzenleiter 2 ist an seinem abisolierten Ende 4 mittels einer Hülse 8 derart verpresst, dass die Aluminiumlitzen 6 kompaktiert sind, so dass zwischen den Aluminiumlitzen 6 Lufteinschüsse im Wesentlichen entfernt sind. Anschließend wird die Innenfläche der Hülse 8 mittels Ultraschallschweißen mit den Aluminiumlitzen verschweißt, so dass eine stoffschlüssige Verbindung zwischen der Hülse 8 und den Aluminiumlitzen 6 gebildet ist.

Die so kompaktierte und mit der Hülse stoffschlüssig verbundene Stirnseite des Aluminiumlitzenleiters 2 wird beispielsweise mittels spanender Verfahren von Aluminiumoxid befreit. Auch kann ein Entschichten mittels Laser eingesetzt werden.

Im unmittelbaren Anschluss daran wird das abisolierte Ende 4 samt Hülse 8 mit einem Anschlussteil 10 ultraschallverschweißt.

Fig. 1b zeigt einen Aufbau eines Systems zur Herstellung einer Verbindung wie sie in Fig. 1a gezeigt ist.

Hierbei wird das abisolierte Ende 4 des Litzenleiters 2 durch zwei Greifarme 12 zunächst eingespannt. Die Greifarme 12 könnten Pressstempel sein, die die Hülse formschlüssig mit dem Litzenleiter verpressen können. Dabei kann entweder das abisolierte Ende 4 alleine oder zusammen mit einer Hülse 8 verpresst werden. Hierdurch entsteht ein kompaktiertes Ende der Litzen 6. Nach dem Kompaktieren können die Greifarme als Ultraschallschweißflächen mittels Ultraschallschweißen die Hülse 8 mantelseitig mit den Litzen 6 der Leitung 2 verschweißen. Es entsteht ein Stoffschluss zwischen den Litzen 6 und der inneren Mantelfläche der Hülse 8.

Die Greifarme 12 können anschließend die Hülse 8 samt Leitung 2 an das hier als Kabelschuh gebildete Anschlussteil 10 heranführen.

Dort kann eine Sonotrode 14 in Richtung der Längsachse der Leitung 2 auf die Kontaktfläche zwischen der Leitung 2 und dem Anschlussteil 10 herangeführt werden. Die Greifer 12 bilden die Gegenkraft zu dem axial durch die Sonotrode 14 eingetragenen Anpressdruck. Die Sonotrode 14 kann mittels Ultraschallschweißen, longitudinal oder mittels Walzbewegung, eine Schweißenergie in die Verbindungsstelle zwischen dem Anschlussteil 10 und den Litzen 6 sowie der Hülse 8 einbringen um dort eine stoffschlüssige Verbindung zwischen dem Anschlussteil 10 und den Litzen 6 sowie der Hülse 8 herzustellen.

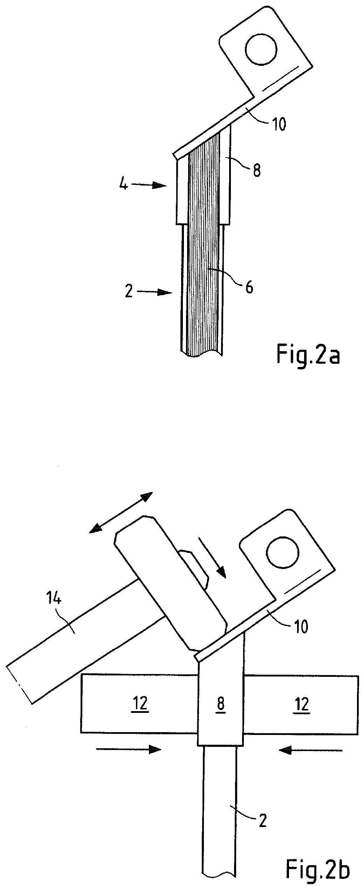

Fig. 2a zeigt eine zu der Fig. 1a ähnliche Konfiguration. Hierbei ist stirnseitig nach dem Kompaktieren und/oder Verschweißen zwischen den Litzen 6 und der Hülse 8 zunächst eine winklige Stirnfläche mittels spanhebender Verfahren hergestellt worden. An diese in einem Winkel zu der Längsachse verlaufende Stirnfläche kann ein Anschlussteil 10, hier z.B. ein Flachleiter, mittels Ultraschallschweißen verschweißt werden. Durch das Verschweißen zwischen der Hülse 8 und den Litzen 6 an der Innenseite der Hülse 8 wird erreicht, dass beim anschließenden Formen der Stirnfläche bzw. Verschweißen mit dem Anschlussteil 10 die Litze 6 aus der Hülse 8 gedrückt werden.

Fig. 2b zeigt einen Aufbau eines Systems zur Herstellung einer Verbindung wie sie in Fig. 2a gezeigt ist.

Hierbei wird das abisolierte Ende 4 des Litzenleiters 2 durch zwei Greifarme 12 zunächst eingespannt. Dabei kann entweder das abisolierte Ende 4 alleine oder zusammen mit einer Hülse 8 verpresst werden. Hierdurch entsteht ein kompaktiertes Ende der Litzen 6. Nach dem Kompaktieren können die Greifarme als Ultraschallschweißflächen mittels Ultraschallschweißen die Hülse 8 mantelseitig mit den Litzen 6 der Leitung 2 verschweißen. Es entsteht ein Stoffschluss zwischen den Litzen 6 und der inneren Mantelfläche der Hülse 8.

Anschließend können die Greifarme 12 die Hülse 8 samt Leitung 2 zunächst an eine Fräsvorrichtung heranführen, an der die Stirnseite winklig zur Längsachse der Leitung 2 plan gefräst wird. Überstehende Litzenenden und Teile der Hülse werden dabei entfernt. Ein Schneiden ist auch möglich.

Anschließend können die Greifarme 12 die Hülse 8 samt Leitung 2 an das hier als Kabelschuh gebildete Anschlussteil 10 heranführen.

Dort kann eine Sonotrode 14 auf winklig zur Längsachse der Leitung 2 verlaufende Kontaktfläche zwischen der Leitung 2 und dem Anschlussteil 10 herangeführt werden. Die Greifer 12 bilden die Gegenkraft zu dem axial durch die Sonotrode 14 eingetragenen Anpressdruck. Die Sonotrode 14 kann mittels Ultraschallschweißen, longitudinal oder mittels Walzbewegung, eine Schweißenergie in die Verbindungsstelle zwischen dem Anschlussteil 10 und den Litzen 6 sowie der Hülse 8 einbringen um dort eine stoffschlüssige Verbindung zwischen dem Anschlussteil 10 und den Litzen 6 sowie der Hülse 8 herzustellen.

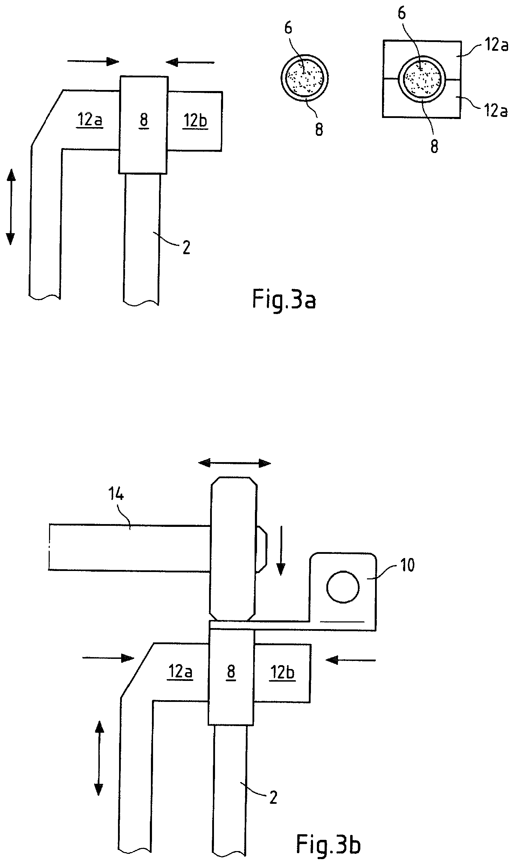

Fig. 3a zeigt eine Konfiguration der Greifarme 12 zum Kompaktieren und gleichzeitigen Verschweißen von Litzen 6 und Hülse 8, wobei ebenfalls ein Querschnitt durch die Hülse 8 samt Leitung 2 mit den Greifarmen 12 gezeigt ist.

Ein erster Greifarm 12a kann als Sonotrode gebildet sein und ein zweiter Greifarm 12b kann als Amboss gebildet sein.

Zunächst werden die Greifarme 12a, 12b wie im Schnitt gezeigt, auf die Hülse 8 mit den Litzen 6 zu bewegt und Verpressen dabei die Hülse 8 derart, dass die Litzen 6 darin kompaktiert sind.

Die Aluminiumhülse 8 kann beispielsweise eine Wandstärke von weniger als 2mm haben. Die Aluminiumhülse 8 kann darüber hinaus beispielsweise kürzer als 5cm, bevorzugt kürzer als 3cm sein.

Anschließend wird mittels longitudinalem Ultraschallschweißen die Hülse 8 an ihrer Innenfläche mit den Litzen 6 verschweißt, so dass dort eine stoffschlüssige Verbindung gebildet ist.

Diese Verbindung wird, wie in Fig. 3b gezeigt, durch die Sonotrode 14 mit dem Anschlussteil verschweißt. Hierzu wird die Sonotrode 14 gegen das Anschlussteil 10 gepresst und anschließend wird der Ultraschallschweißvorgang durchgeführt. Hierbei entsteht eine stoffschlüssige Verbindung zwischen dem Anschlussteil 10 und den Litzen 6 sowie der Hülse 8.

Bei Schweißen kann entweder ein longitudinales Schweißen oder ein Walzschweißen verwenden werden.

Durch das Ultraschallwalzschweißen ist es möglich, mit geringen Taktzeiten, beispielsweise bei einer Schweißzeit von 1,5 Sekunden oder weniger, beispielsweise 1,2 Sekunden, Fügepartner miteinander zu verschweißen. Die axiale Endlage der Fügepartner zueinander ist während des Ultraschallwalzschweißens dauerhaft definiert.

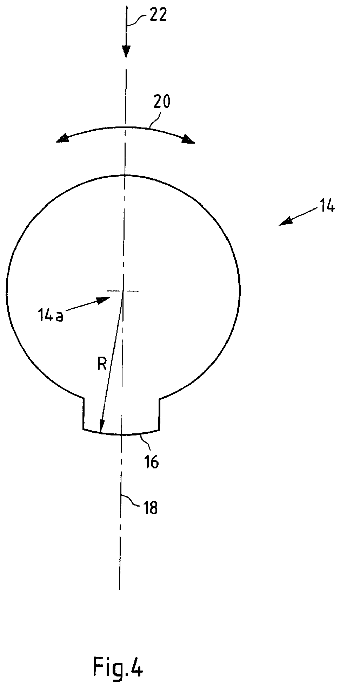

Fig. 4 zeigt eine Schnittansicht durch eine Sonotrode 14. Die Sonotrode 14 ist um ihre Längsachse 14a verdrehbar gelagert. An der Sonotrode 14 ist an einer Umfangsfläche eine Arbeitsfläche 16 vorgesehen. Die gesamte Arbeitsfläche 16 hat einen radialen Abstand R von der Längsachse 14a. Die Sonotrode 14 ist vorzugsweise achssymmetrisch zu zumindest der Symmetrieachse 18, welche senkrecht zur Längsachse 14a und vorzugsweise senkrecht zur Arbeitsfläche 16 verläuft.

Die Sonotrode 14 wird beim Walzschweißen entlang der Richtung 20 verdreht, wobei die Frequenz der Oszillation vorzugsweise zumindest 20 kHz beträgt. Während dessen wird die Sonotrode 12 in Richtung 22 gegen ein Werkstück gepresst, welches verschweißt werden soll.

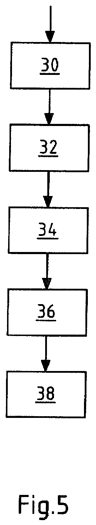

Fig. 5 zeigt schematisch ein Ablaufdiagramm eines gegenständlichen Verfahrens. In einem ersten Schritt 30 kann von einem Coil ein endloses Aluminiumband abgewickelt werden und einem Splicecrimpwerkzeug zugeführt werden. Hierzu wird in einem Arbeitsgang das Aluminiumband geschnitten, um die Litzen 6 des Aluminiumlitzenleiters2 geformt und verpresst. Hierdurch werden die Aluminiumlitzen 6 des Aluminiumlitzenleiters 2 kompaktiert und Hohlräume verhindert. Dies kann in einem Schritt 32 geschehen. In einem Schritt 34 wird das abisolierte Ende, welches mit dem Verpressteil verpresst ist mit einem Blechbiegeteil an eine Sonotrode 12 herangeführt und die Sonotrode 12 presst das Blechbiegeteil 10 gegen die Stirnseite des Aluminiumlitzenleiters 6 und das Verpressteil 8. In einem Schritt 38 wird mittels der Sonotrode 12 eine Walzbewegung auf Blechbiegeteil 10 aufgebracht. Hierdurch wird Schweißenergie in das Blechbiegeteil 10 und den Aluminiumlitzenleiters 6 eingetragen.

## Patentansprüche

1. Verfahren zur Herstellung einer Verbindung zwischen einem Litzenleiter und einem Anschlussteil, bei dem
- ein Ende (4) des Litzenleiters (2) von einer Stützhülse (8) umschlossen wird,
- ein Anschlussteil (10) mit dem Ende (4) des Litzenleiters (2) stoffschlüssig verbundenen wird, wobei
- eine Stirnseite des Endes des Litzenleiters (2) mit dem Anschlussteil (10) mittels Ultraschall verschweißt wird,
**dadurch gekennzeichnet,**
- **dass** vor dem Ultraschallverschweißen der Stirnseite des Endes des Litzenleiters (2) mit einem Anschlussteil (10) das Ende (4) des Litzenleiters (2) mit der Stützhülse (8) mittels Ultraschall verschweißt wird, wobei ein Stoffschluss zwischen den Einzellitzen des Litzenleiters (2) untereinander und mantelseitig zwischen dem Litzenleiter (2) und der Stützhülse (8) gebildet wird.

2. Verfahren nach Anspruch 1, **dadurch gekennzeichnet, dass** die Stirnseite des Endes des Litzenleiters (4) mit dem Anschlussteil (10) mittels Ultraschallwalzschweißen oder mittels longitudinalem Ultraschallschweißen verschweißt wird.

3. Verfahren nach Anspruch 1 oder 2, **dadurch gekennzeichnet,**
**dass** der Litzenleiter (2) aus einem Aluminiumwerkstoff oder einem Kupferwerkstoff gebildet ist.

4. Verfahren nach Anspruch 1 oder 2, **dadurch gekennzeichnet,**
**dass** das Anschlussteil (10) ein Flachteil ist, insbesondere dass das Anschlussteil aus einem Aluminiumwerkstoff oder einem Kupferwerkstoff gebildet ist, insbesondere dass das Anschlussteil (10) aus einem Verbundmaterial, insbesondere aus Kunststoff-Aluminium Verbund gebildet ist.

5. Verfahren nach einem der vorangehenden Ansprüche, **dadurch gekennzeichnet, dass** die Litzen (6) durch die Stützhülse (8) zu einem Bündel verpresst werden.

6. Verfahren nach Anspruch 5, **dadurch gekennzeichnet, dass** durch die Stützhülse (8) Stauchkräfte eines Ultraschallschweißwerkzeuges (12) aufgenommen werden.

7. Verfahren nach Anspruch 1 bis 6, **dadurch gekennzeichnet, dass** eine hohlraumfreie Schweißnaht (8a) zwischen der Stirnseite des Endes (4) des Litzenleiters (2) zusammen mit der Stützhülse (8) und dem Anschlussteil (10) gebildet wird.

8. Verfahren nach einem der vorangehenden Ansprüche, **dadurch gekennzeichnet, dass** die Stützhülse (8) aus Aluminiumwerkstoff oder Kupferwerkstoff gebildet ist.

9. Verfahren nach einem der vorangehenden Ansprüche, **dadurch gekennzeichnet, dass** das Anschlussteil (10) ein Flachleiter oder Blechstanzteil ist, wobei ein Ende des Flachleiters oder Blechstanzteils mit dem Litzenleiters (2) verbunden wird.

10. Verfahren nach einem der vorangehenden Ansprüche, **dadurch gekennzeichnet, dass** das Anschlussteil (10) ein Rundleiter ist.

11. Verbindung eines Litzenleiters (2) mit einem Anschlussteil (10) hergestellt nach einem Verfahren nach einem der Ansprüche 1 bis 10, mit
- einem Ende (4) des Litzenleiters (2),
- einem das Ende (4) des Litzenleiters (2) umschließenden Stützhülse (8), und
- einem mit dem Ende (4) des Litzenleiters (2) stoffschlüssig verbundenen Anschlussteil (10), wobei
- zwischen einer Stirnseite des Endes des Litzenleiters (2) und dem Anschlussteil (10) eine Ultraschallschweißnaht ist,
**dadurch gekennzeichnet,**
- **dass** zwischen dem Ende (4) des Litzenleiters (2) und der Stützhülse (8) eine Ultraschallschweißnaht ist und wobei die Einzellitzen des Litzenleiters (2) untereinander stoffschlüssig verbunden sind und der Litzenleiter (2) mit der Stützhülse (8) mantelseitig stoffschlüssig verbunden sind.

## Claims

1. Method of manufacturing a connection between a stranded conductor and a terminal, in which
- an end (4) of the strand conductor (2) is enclosed by a sleeve (8),
- a connecting part (10) is materially bonded to the end (4) of the stranded conductor (4), wherein
- an end face of the end of the stranded conductor (2) is welded to the connecting part (10) by means of ultrasound,
**characterized in that**
- the end (4) of the stranded conductor is welded to the sleeve (8) by means of ultrasound prior to the ultrasonic welding of the end face of the end of the stranded conductor (2) to the connecting part (10), wherein
- a material bond in-between the strands of the stranded wire (8) and between an outer shell side of the stranded wire (8) and the sleeve (8) is formed.

2. Method according to claim 1, **characterized in that** the end face of the end of the stranded conductor (4) is welded to the connecting part (10) by means of ultrasonic roll welding or by means of longitudinal ultrasonic welding.

3. Method according to claim 1 or 2, **characterized in that** the stranded conductor (2) is formed from an aluminium material or a copper material.

4. Method according to claim 1 or 2, **characterized in that**
the connecting part (10) is a flat part, in particular **in that** the connecting part is formed from an aluminium material or a copper material, in particular **in that** the connecting part (10) is formed from a composite material, in particular from a plastic-aluminium composite.

5. Method according to one of the preceding claims, **characterized in that** the sleeve (8) presses the strands (6) into a bundle.

6. Method according to claim 5, **characterized in that** the sleeve (8) absorbs upsetting forces of an ultrasonic welding tool (12).

7. Method according to claims 1 to 6, **characterized in that** a weld seam (8a) between the end face of the end (4) of the strand conductor (2) together with the sleeve (8) and the connecting part (10) is free of cavities.

8. Method according to one of the preceding claims, **characterized in that** the sleeve (8) is formed from aluminium material or copper material.

9. Method according to one of the preceding claims, **characterized in that** the connecting part (10) is a flat conductor or sheet-metal stamped part, wherein an end of the flat conductor or sheet-metal stamped part is connected to the stranded conductor (2).

10. Method according to one of the preceding claims, **characterized in that** the connecting part (10) is a round conductor.

11. Connection of a stranded conductor (2) to a connecting part (10) manufactured according to a method of one of claims 1 to 10, with
- an end (4) of the stranded conductor (2),
- a sleeve (8) enclosing the end (4) of the strand conductor (2), and
- a connecting part (10) which is materially bonded to the end (4) of the stranded conductor (2), wherein
- an ultrasonic welding seam is formed between an end face of the end of the stranded conductor (2) and the connecting part (10),
**characterized in that**
- an ultrasonic welding seam is formed between the end (4) of the stranded conductor (2) and the sleeve (8), wherein
- a material bond in-between the strands of the stranded wire (8) is formed and a material bond between an outer shell side of the stranded wire (8) and the sleeve (8) is formed.

## Revendications

1. Procédé pour réaliser une connexion entre un conducteur toronné et une pièce de raccordement,
- dans lequel une extrémité (4) du conducteur toronné (2) est entourée d'un manchon de support (8), une pièce de raccordement (10) est reliée à l'extrémité (4) du conducteur toronné (2) au moyen d'une liaison matérielle,
- où une face frontale de l'extrémité du conducteur toronné (2) est soudée à la
pièce de raccordement (10) au moyen d'ultrasons,
**caractérisé**
- **en ce que**, avant que la face frontale de l'extrémité du conducteur toronné (2) soit soudée par ultrasons à une pièce de raccordement (10), l'extrémité (4) du conducteur toronné (2) est soudée par ultrasons au manchon de support (8), une liaison matérielle étant formée entre les brins individuels du conducteur toronné (2) eux-mêmes et entre le conducteur toronné (2) et le manchon de support (8) du côté enveloppe.

2. Procédé selon la revendication 1, **caractérisé en ce que** la face frontale de l'extrémité du conducteur toronné (4) est soudée à la pièce de raccordement (10) au moyen d'un soudage par rouleau à ultrasons ou au moyen d'un soudage longitudinal à ultrasons.

3. Procédé selon la revendication 1 ou 2, **caractérisé en ce que** le conducteur toronné (2) est formé d'un matériau en aluminium ou d'un matériau en cuivre.

4. Procédé selon la revendication 1 ou 2, **caractérisé en ce que** la pièce de raccordement (10) est une pièce plate, en particulier que la pièce de raccordement est formée d'un matériau d'aluminium ou d'un matériau de cuivre, en particulier que la pièce de raccordement (10) est formée d'un matériau composite, en particulier d'un composite plastique-aluminium.

5. Procédé selon l'une quelconque des revendications précédentes, **caractérisé en ce que** les brins (6) sont pressés en un faisceau par le manchon de support (8).

6. Procédé selon la revendication 5, **caractérisé en ce que** les forces de compression d'un outil de soudage par ultrasons (12) sont absorbées par le manchon de support (8).

7. Procédé selon les revendications 1 à 6, **caractérisé en ce qu'**un cordon de soudure (8a) sans cavité est formé entre la face frontale de l'extrémité (4) du conducteur toronné (2) avec le manchon de support (8) et la pièce de raccordement (10).

8. Procédé selon l'une quelconque des revendications précédentes, **caractérisé en ce que** le manchon de support (8) est formé d'un matériau en aluminium ou en cuivre.

9. Procédé selon l'une quelconque des revendications précédentes, **caractérisé en ce que** la pièce de raccordement (10) est un conducteur plat ou une pièce emboutie en tôle, où une extrémité du conducteur plat ou de la pièce emboutie en tôle est connectée au conducteur toronné (2).

10. Procédé selon l'une quelconque des revendications précédentes, **caractérisé en ce que** la pièce de raccordement (10) est un conducteur rond.

11. Connexion d'un conducteur toronné (2) à une pièce de raccordement (10) réalisée selon un procédé selon l'une quelconque des revendications 1 à 10, comprenant
- une extrémité (4) du conducteur toronné (2),
- un manchon de support (8) entourant l'extrémité (4) du conducteur toronné [2], et
- une pièce de raccordement (10) connectée à l'extrémité (4) du conducteur toronné (2) par une liaison matérielle,
- où un cordon de soudure par ultrasons se trouve entre une face frontale de l'extrémité du conducteur toronné (2) et la pièce de raccordement (10), **caractérisé**
- **en ce qu'**il y a un cordon de soudure par ultrasons entre l'extrémité (4) du conducteur toronné (2) et le manchon de support (8), et les brins individuels du conducteur toronné (2) étant reliés entre eux par liaison matérielle et le conducteur toronné (2) étant relié au manchon de support (8) par liaison matérielle du côté enveloppe.
